# EUROPEAN PATENT APPLICATION

(11) **EP 4 606 807 A1**
(43) Date of publication of application: **27.08.2025**
(21) Application number: 23881670.6
(22) Date of filing: 16.10.2023
(51) Int. Cl.: C07F 9/38, C08K 5/5393, C08K 5/5313, C08L 77/06, C08L 77/02

(54) **ALKYLPHOSPHONOUS ACID COMPOUND AS WELL AS PREPARATION METHOD THEREFOR AND USE THEREOF**

(30) Priority: 24.10.2022 CN 202211303651
(71) Applicant: KINGFA SCI. & TECH. CO., LTD., Guangzhou, Guangdong 510663 (CN)
(72) Inventor: LI, Jide, Guangzhou, Guangdong 510663 (CN); CHEN, Pingxu, Guangzhou, Guangdong 510663 (CN); YE, Nanbiao, Guangzhou, Guangdong 510663 (CN); CHAI, Shengyong, Guangzhou, Guangdong 510663 (CN); WANG, Tinghong, Guangzhou, Guangdong 510663 (CN); LIU, Zhen, Guangzhou, Guangdong 510663 (CN); ZENG, Qingliang, Guangzhou, Guangdong 510663 (CN)
(74) Representative: Meyer, Thorsten
(86) International application number: PCT/CN2023/124681
(87) International publication number: WO 2024/088091

(57) **Abstract**

The present disclosure relates to an alkylphosphonate complex, and a preparation method and a use thereof. The alkylphosphonate complex contains aluminum alkylphosphonate, aluminum hydrogen alkylphosphonate, aluminum phosphite and crystal water in its structure. The alkylphosphonate complex is combined with aluminum diethylphosphinate to serve as a flame retardant and applied in inflame retardant nylon, and can effectively solve the foaming problem and mold fouling problem in the preparation process. Further, the prepared material has a good mechanical property and a good flame-retardant property.

## Description

### TECHNICAL FIELD

The present disclosure relates to the field of organic synthesis technology, and specifically relates to an alkylphosphonate complex (alkylphosphonic acid complex salt), and a preparation method and a use thereof.

### BACKGROUND

Since aluminum phosphite has a good, synergistic flame-retardant effect with aluminum diethylphosphinate (ADP), low water solubility and low acidity, it is currently widely used as a flame retardant synergist and applied to glass fiber reinforced engineering plastics, such as nylon, polyester and other systems, and has good flame retardancy. It has been found in Chinese Patent application CN 104114485A that a mixture of aluminum hydrogen phosphite and aluminum salts is significantly more stable than pure aluminum phosphite. However, both aluminum phosphite and aluminum hydrogen phosphite contain a highly reductive phosphorus-hydrogen bond in their structures, so they still show poor thermal stability. They are easily decomposed to produce highly toxic phosphine gas which is flammable in the air during a high-temperature decomposition process, thereby bringing a great safety hazard. At the same time, since aluminum phosphite is an inorganic salt and has poor compatibility with a polymer matrix, an increased addition amount of the aluminum phosphite, as a synergistic flame retardant, will have a great impact on the mechanical properties and processing properties of the polymer matrix, which seriously limits the application of aluminum phosphite.

By introducing an alkyl to form a phosphorus-carbon bond, aluminum alkylphosphonate (alkylphosphonic acid aluminum salt) replaces the phosphorus-hydrogen bond in aluminum phosphite with the phosphorus-carbon bond, thereby improving its compatibility with the resin matrix. At the same time, without a reductive phosphorus-hydrogen bond in the molecular structure, aluminum alkylphosphonate has higher thermal stability than phosphorous acid, and highly toxic and flammable phosphine gas is no longer generated during the decomposition process.

As flame retardant synergists of aluminum diethylphosphinate, aluminum phosphite and aluminum alkylphosphonate themselves do not have good flame retardant properties, but can improve the flame retardant efficiency of aluminum diethylphosphinate to a certain extent. A flame retardant system comprising aluminum alkylphosphonate and aluminum diethylphosphinate can effectively reduce screw corrosion caused in the resin processing process, and the flame-retarded polymer matrix shows better whiteness.

However, it is found in the actual production process that foaming easily occurs during a process of moving in and out for the screw rod and mold fouling is easily formed during an injection molding process, when aluminum phosphite or aluminum alkylphosphonate is combined with aluminum diethylphosphinate to serve as a flame retardant in flame retardant Polyamide 66 (PA66, polyhexamethylene adipamide), Polyamide 6 (PA6, polycaprolactam), and high-temperature nylon.

### SUMMARY OF THE DISCLOSURE

An objective of the present disclosure is to overcome shortcomings of the prior art and provide an alkylphosphonate complex, which is combined with aluminum diethylphosphinate to serve as a flame retardant in flame retardant PA66, PA6 and high-temperature nylon in an injection molding process, without foaming and mold fouling. At the same time, the prepared material has a good mechanical property and a good flame-retardant property.

Another objective of the present disclosure is to provide a preparation method of the alkylphosphonate complex.

Yet another objective of the present disclosure is to provide a use of the alkylphosphonate complex as a flame retardant synergist of aluminum diethylphosphinate.

To achieve the above objectives, the present disclosure provides the following technical solutions.

An alkylphosphonate complex is provided, having a structural formula shown in formula (I): 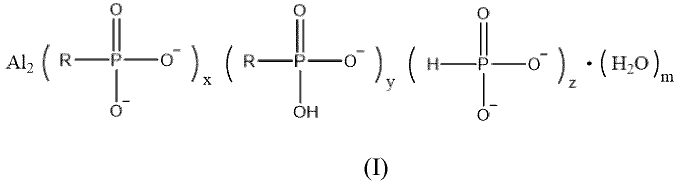 wherein in the formula (I), *R* is methyl or ethyl; *x* represents 2.6-2.98; y represents 0.01-0.39, z represents 0.01-0.10; and *m* represents 1.0-2.0.

In the present disclosure, an alkylphosphonate complex is provided and the alkylphosphonate complex contains aluminum alkylphosphonate, aluminum hydrogen alkylphosphonate, aluminum phosphite and crystal water. The alkylphosphonate complex not only can effectively solve the foaming problem in the process of screw extrusion when applied in high-temperature nylon, but also can effectively solve the mold fouling problem easily occurring in the injection molding process when applied in flame retardant PA66, PA6 and high-temperature nylon.

Preferably, a median particle diameter, D₅₀, of the alkylphosphonate complex is in a range of from 1 µm to 100 µm.

Preferably, a content of sodium sulfate in the alkylphosphonate complex is in a range of from 100 ppm to 5,000 ppm.

A preparation method of the alkylphosphonate complex comprises following steps:
mixing an alkylphosphonate and a phosphite to obtain a mixture, subjecting the mixture to a metathesis reaction with an aqueous aluminum salt solution, and then subjecting a resulting mixture to precipitation, filtration, washing, and drying at a temperature of 105-120 °C successively to obtain the alkylphosphonate complex; the metathesis reaction is conducted at a temperature of 60-130 °C.

Specifically, the alkylphosphonate may be prepared by one of the following methods:
Method 1:
   hydrolyzing a diester of an alkylphosphonic acid under an alkaline condition to obtain the alkylphosphonate;
or, Method 2:
   S1. in the presence of an initiator, allowing a phosphorous acid in an aqueous solution to react with gas-phase ethylene so as to obtain an alkylphosphonic acid;
   S2. allowing the alkylphosphonic acid to react with an alkaline solution in an equimolar ratio to obtain the alkylphosphonate.

Preferably, the aqueous aluminum salt solution is an aqueous aluminum sulfate solution or an aqueous aluminum chloride solution.

Preferably, the aqueous aluminum salt solution is slowly added, by using a high-pressure metering pump, with an addition time of 60-180 minutes.

Preferably, in step S2, the alkaline solution is an aqueous sodium hydroxide solution or an aqueous potassium hydroxide solution.

A use of the alkylphosphonate complex is provided, serving as a flame retardant synergist of aluminum diethylphosphinate.

A composition is provided, comprising following components by weight: 1 to 7 parts of the alkylphosphonate complex; and 12 to 19 parts of aluminum diethylphosphinate.

A use of the composition is provided, serving as a flame retardant in flame retardation of PA66, PA6, or high-temperature nylon.

Compared with the prior art, the present disclosure has the following beneficial effects.

The present disclosure provides an alkylphosphonate complex, which contains aluminum alkylphosphonate, aluminum hydrogen alkylphosphonate, aluminum phosphite and crystal water. The alkylphosphonate complex is combined with aluminum diethylphosphinate to serve as a flame retardant and applied in flame retardation of nylon, and can effectively solve the foaming problem and mold fouling problem in the preparation process. Further, the prepared material has a good mechanical property and a good flame-retardant property.

### BRIEF DESCRIPTION OF DRAWINGS

Figure 1 is an effect picture showing that no foaming occurs;
Figure 2 is an effect picture showing that slight foaming occurs;
Figure 3 is an effect picture showing that obvious foaming occurs.

### DETAILED DESCRIPTION

The present disclosure is further described in detail below in conjunction with specific examples, which are only intended to explain the present disclosure, rather than to limit the scope of the present disclosure. Test methods used in the following examples are conventional ones, unless otherwise specified; materials and reagents used are commercially available, unless otherwise specified.

In Examples 1-4 and Comparative Examples 1-3, a complex was prepared respectively, by using the following method comprising the following steps:
S1. placing solid phosphorous acid, water and sodium persulfate into an autoclave, replacing air with nitrogen, introducing ethylene into the autoclave by using a pressure reducer and keeping a constant pressure at 1.6 MPa, heating until a temperature is increased to 85 °C, holding the temperature at 85 °C for 6 hours, continuously adding an aqueous sodium persulfate solution during the 6-hour heat preservation process, and then holding the temperature at 90 °C for 1 hour, cooling and venting to obtain an aqueous ethylphosphonic acid solution; the aqueous sodium persulfate solution is prepared by 5 g sodium persulfate and 20 g water;
S2. adding phosphorous acid into the aqueous ethylphosphonic acid solution, and neutralizing a resulting solution to pH=7 with 20 wt.% aqueous sodium hydroxide solution to obtain an aqueous solution of sodium ethylphosphonate and sodium phosphite;
S3. heating the aqueous solution of sodium ethylphosphonate and sodium phosphite to a temperature of T₁, and continuously adding an aqueous aluminum sulfate solution within 120 minutes by using a metering pump to perform a metathesis reaction, then cooling and filtering successively, washing a filter cake for 3 times with water in an amount (weight) of three times that of the filter cake, and then drying the filter cake to a constant weight at a temperature of T₂ to obtain the complex.

Quantities of raw materials and process parameters in Examples 1-4 and Comparative Examples 1-3 are shown in Table 1.

**Table 1 Quantities of raw materials and process parameters in Examples 1-4 and Comparative Examples 1-3**

| | | Example 1 | Example 2 | Example 3 | Example 4 | Comparative Example 1 | Comparative Example 2 | Comparative Example 3 |
|---|---|---|---|---|---|---|---|---|
| Number of complex | | 1 | 2 | 3 | 4 | 5 | 6 | 7 |
| S1 | Phosphorous acid, g | 82 | 82 | 82 | 82 | 82 | 82 | 82 |
| | Water, g | 164 | 164 | 164 | 164 | 164 | 164 | 164 |
| | Sodium persulfate, g | 1 | 1 | 1 | 1 | 1 | 1 | 1 |
| S2 | Phosphorous acid, g | 0.28 | 0.28 | 0.28 | 2.75 | - | - | - |
| S3 | T₁, °C | 125 | 90 | 60 | 90 | 150 | 90 | 150 |
| | T₂, °C | 120 | 120 | 120 | 105 | 150 | 150 | 120 |

### Example 5

S1. mixing dimethyl ethylphosphonate with 120 mol% of 20 wt% aqueous sodium hydroxide solution, holding the temperature at 80 °C and stirring for 3 h, after cooling to room temperature, neutralizing a resulting solution with 10 wt.% aqueous sulfuric acid solution to pH=7 so as to obtain an aqueous sodium ethylphosphonate solution;
S2. adding 3.45 mol% phosphorous acid into the aqueous sodium ethylphosphonate solution, neutralizing a resulting solution with 20 wt.% aqueous sodium hydroxide solution to pH=7 so as to obtain an aqueous solution of sodium ethylphosphonate and sodium phosphite;
S3. heating the aqueous solution of sodium ethylphosphonate and sodium phosphite to a temperature of 60 °C, continuously adding an aqueous aluminum sulfate solution within 120 minutes by using a metering pump to perform a metathesis reaction, then cooling and filtering successively, washing a filter cake for 3 times with water in an amount (weight) of three times that of the filter cake, and then drying the filter cake to a constant weight at a temperature of 120 °C to obtain a complex.

Medium particle diameters, D₅₀, of the complexes obtained in the above Examples 1-5 were in a range of from 1µm to 100 µm, and contents of sodium sulfate in the complexes were in a range of from 100 to 5000 ppm. Testing methods were shown as follows.
1) Medium particle diameter: taking an appropriate amount of sample and wetting it with a small amount of ethanol, adding water and stirring gently with a glass rod, and testing by using a Malvern laser particle size analyzer.
2) Content of sodium sulfate: taking an appropriate amount of sample and digesting the sample, testing a content of a sulfate anion by using an inductively coupled plasma (ICP) instrument, and calculating the content of sodium sulfate.

Specific results of the medium particle diameters, D₅₀, of the complexes obtained in Examples 1-5 and contents of sodium sulfate in the complexes were shown in Table 2.

**Table 2**

| | D₅₀, µm | Content of sodium sulfate, ppm |
|---|---|---|
| Example 1 | 20 | 530 |
| Example 2 | 28 | 366 |
| Example 3 | 16 | 648 |
| Example 4 | 35 | 278 |
| Example 5 | 38 | 262 |

The complexes prepared in the above-mentioned Examples 1-5 and Comparative Examples 1-3 were measured by using Proton Nuclear Magnetic Resonance Spectroscopy (¹H-NMR), and a method for measuring a content of crystal water was provided, comprising following steps:
after drying the complexes prepared in Examples 1 to 5 and Comparative Examples 1 to 3, quickly taking the complexes out, placing the complexes in a dryer to cool them to room temperature and weighing them to obtain m₁; then drying the complexes at a temperature of 150 °C to constant weights, taking the complexes out, quickly placing the complexes in a dryer to cool them to room temperature and weighing them to obtain m₀; and calculating the content of the crystal water (*m*) according to a formula, *m=(m₁-m₀)×M*/*(18×m₀)*, where *M* is a molecular weight of a complex with the absence of crystal water. The testing results were shown in Table 3.

**Table 3 Testing results in Examples 1-5 and Comparative Examples 1-3**

| | *x* | *y* | *z* | *m* |
|---|---|---|---|---|
| Example 1 | 2.98 | 0.01 | 0.01 | 1.0 |
| Example 2 | 2.95 | 0.09 | 0.01 | 1.0 |
| Example 3 | 2.80 | 0.38 | 0.01 | 1.0 |
| Example 4 | 2.86 | 0.09 | 0.10 | 2.0 |
| Example 5 | 2.71 | 0.38 | 0.10 | 1.0 |
| Comparative Example 1 | 3 | 0 | 0 | 0 |
| Comparative Example 2 | 2.95 | 0.10 | 0 | 0 |
| Comparative Example 3 | 3 | 0 | 0 | 1.0 |

As can be seen from Table 3, the complexes prepared in the present disclosure contained aluminum alkylphosphonate, aluminum hydrogen alkylphosphonate, aluminum phosphite and crystal water. As can be seen from Comparative Example 1, when a temperature for performing the metathesis reaction and a drying temperature were relatively high and phosphorous acid was not added during the metathesis reaction process, the prepared complex only contained aluminum alkylphosphonate. As can be seen from Comparative Example 2, when the drying temperature was relatively high and phosphorous acid was not added during the metathesis reaction process, the obtained complex did not contain aluminum phosphite and crystal water. As can be seen from Comparative Example 3, when the temperature for performing the metathesis reaction was relatively high and phosphorous acid was not added during the metathesis reaction process, the obtained complex did not contain aluminum hydrogen alkylphosphonate and aluminum phosphite.

### USES

Aluminum diethylphosphinate, a glass fiber, PA66, PA6, high-temperature nylon (PA10T, poly(decamethylene terephthalamide)) were all commercially available.

In Comparative Examples 4-7, commercially available aluminum phosphite and the complexes obtained in Comparative Examples 1-3 were used as flame retardant synergists. In Examples 6-12, Complexes 1-5 obtained in Examples 1-5 were used as flame retardant synergists. The above mentioned flame retardant synergists were respectively co-mixed with aluminum diethylphosphinate, glass fiber, PA66 and PA6 for extrusion. Quantities of various components in Comparative Examples 4-7 and Examples 6-12 were shown in Table 4. Raw materials used in all parallel experiments were the same.

In Comparative Examples 8-11, commercially available aluminum phosphite and the complexes obtained in Comparative Examples 1-3 were used as flame retardant synergists. In Examples 15-19, Complexes 1-5 obtained in Examples 1-5 were used as flame retardant synergists. The above mentioned flame retardant synergists were respectively co-mixed with aluminum diethylphosphinate, glass fiber and high-temperature nylon (PA10T) for extrusion. Quantities of various components in Comparative Examples 8-11 and Examples 13-19 were shown in Table 5. Raw materials used in all parallel experiments were the same.

**Table 4 Quantities of various components in Comparative Examples 4-7 and Examples 6-12 (parts by weight)**

| | Comparative Example 4 | Comparative example 5 | Comparative example 6 | Comparative example 7 | Example 6 | Example 7 | Example 8 | Example 9 | Example 10 | Example 11 | Example 12 |
|---|---|---|---|---|---|---|---|---|---|---|---|
| PA66 | 52 | 52 | 52 | 52 | 52 | 52 | 52 | 52 | 52 | 52 | 52 |
| PA6 | 8 | 8 | 8 | 8 | 8 | 8 | 8 | 8 | 8 | 8 | 8 |
| Glass fibre | 25 | 25 | 25 | 25 | 25 | 25 | 25 | 25 | 25 | 25 | 25 |
| Aluminum diethylphosphinate | 12 | 12 | 12 | 12 | 19 | 12 | 12 | 12 | 12 | 12 | 12 |
| Aluminum phosphite | 3 | - | - | - | - | - | - | - | - | - | - |
| Comparative Example 1 | - | 3 | - | - | - | - | - | - | - | - | - |
| Comparative Example 2 | - | - | 3 | - | - | - | - | - | - | - | - |
| Comparative Example 3 | - | - | - | 3 | - | - | - | - | - | - | - |
| Example 1 | - | - | - | - | 1 | 7 | 3 | - | - | - | - |
| Example 2 | - | - | - | - | - | - | - | 3 | - | - | - |
| Example 3 | - | - | - | - | - | - | - | - | 3 | - | - |
| Example 4 | - | - | - | - | - | - | - | - | - | 3 | - |
| Example 5 | - | - | - | - | - | - | - | - | - | - | 3 |

**Table 5 Quantities of various components in Comparative Examples 8-11 and Examples 13-19 (parts by weight)**

| | Comparative Example 8 | Comparative Example 9 | Comparative Example 10 | Comparative Example 11 | Example 13 | Example 14 | Example 15 | Example 16 | Example 17 | Example 18 | Example 19 |
|---|---|---|---|---|---|---|---|---|---|---|---|
| PA10T | 52 | 52 | 52 | 52 | 52 | 52 | 52 | 52 | 52 | 52 | 52 |
| Glass fibre | 30 | 30 | 30 | 30 | 30 | 30 | 30 | 30 | 30 | 30 | 30 |
| Aluminum diethylphosphinate | 14.4 | 14.4 | 14.4 | 14.4 | 19 | 12 | 14.4 | 14.4 | 14.4 | 14.4 | 14.4 |
| Aluminum phosphite | 3.6 | - | - | - | - | - | - | - | - | - | - |
| Comparative Example 1 | - | 3.6 | - | - | - | - | - | - | - | - | - |
| Comparative Example 2 | - | - | 3.6 | - | - | - | - | - | - | - | - |
| Comparative | - | - | - | 3.6 | - | - | - | - | - | - | - |
| Example 3 | | | | | | | | | | | |
| Example 1 | - | - | - | - | 1 | 7 | 3.6 | - | - | - | - |
| Example 2 | - | - | - | - | - | - | - | 3.6 | - | - | - |
| Example 3 | - | - | - | - | - | - | - | - | 3.6 | - | - |
| Example 4 | - | - | - | - | - | - | - | - | - | 3.6 | - |
| Example 5 | - | - | - | - | - | - | - | - | - | - | 3.6 |

### PERFORMANCE ANALYSIS

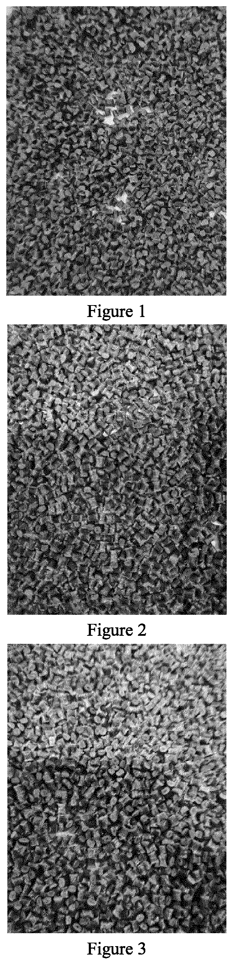

Mechanical properties of the materials obtained in the above-mentioned Comparative examples 4-7 and Examples 5-19 were measured, and foaming phenomenon and mold fouling phenomenon during the injection molding process were observed. For the foaming phenomenon, "no foaming" means that no foaming occurred in the material during the injection molding process, as shown in Figure 1, showing the best effect; "slight foaming" means that a small number of bubbles occurred in the material during the injection molding process and a small number of pores appeared among the particles, as shown in Figure 2, showing a moderate effect; "obvious foaming" means that numerous bubbles occurred in the material during the injection molding process and numerous pores appeared among the particles, as shown in Figure 3, showing the worst effect. For the mold fouling phenomenon, "no mold fouling" means that no mold fouling was generated during the injection molding process of the material, showing the best effect; "slight mold fouling" means that a small amount of mold fouling was generated during the injection molding process of the material, showing a moderate effect; "much mold fouling" means that a large amount of mold fouling was generated during the injection molding process of the material, showing the worst effect.
(1) Tensile strength: Tensile strength of a material was tested by using a microcomputer-controlled electronic universal testing machine, according to Chinese National Standard GB/T 1040-1992, *"Plastics-Determination of Tensile Properties",* with a tensile rate of 50 mm/min;
(2) Vertical burning test: The vertical burning test was performed according to the Underwriters Laboratories Standard UL94-2006, with 5 specimens in each group. The following results were respectively recorded: self-extinguishing time after the first ignition, self-extinguishing time after the second ignition, and whether there is molten dripping or whether the cotton is ignited during the combustion process.

Testing results were shown in Tables 6 and 7.

**Table 6 Testing results in Comparative Examples 4-7 and Examples 6-12**

| Performance index | Comparative Example 4 | Comparative Example 5 | Comparative Example 6 | Comparative Example 7 | Example 6 | Example 7 | Example 8 | Example 9 | Example 10 | Example 11 | Example 12 |
|---|---|---|---|---|---|---|---|---|---|---|---|
| Tensile strength, MPa | 119 | 124 | 124 | 126 | 124 | 125 | 127 | 127 | 129 | 126 | 126 |
| Vertical burning test, 0.8mm | V-1 | V-1 | V-0 | V-0 | V-0 | V-0 | V-0 | V-0 | V-0 | V-0 | V-0 |
| Mold fouling in injection molding process | Much mold fouling | Much mold fouling | Slight mold fouling | Much mold fouling | No mold fouling | No mold fouling | No mold fouling | No mold fouling | No mold fouling | No mold fouling | No mold fouling |
| Foaming performance | No foaming | No foaming | No foaming | No foaming | No foaming | No foaming | No foaming | No foaming | No foaming | No foaming | No foaming |

It can be seen from Table 6 that the complexes of the present disclosure were combined with aluminum diethylphosphinate to serve as a flame retardant and applied in flame retardation of PA6 and PA66, no mold fouling was generated and no foaming occurs during the injection molding process and the prepared material had good mechanical property and good flame-retardant property. It can be seen from Comparative Example 4 that when aluminum phosphite was combined with aluminum diethylphosphinate to serve as a flame retardant and applied in flame retardation of PA6 and PA66, some mold fouling was generated during the injection molding process and the flame-retardant property of the prepared material could only reach V-1 level. It can be seen from Comparative Example 5 that, when the complex obtained in Comparative Example 1 was combined with aluminum diethylphosphinate to serve as a flame retardant, i.e., when the complex only contained aluminum alkylphosphonate, and applied in flame retardation of PA6 and PA66, some mold fouling was generated during the injection molding process and the flame-retardant property of the prepared material could only reach V-1 level. It can be seen from Comparative example 6 that, when the complex obtained in Comparative example 2 was combined with aluminum diethylphosphinate to serve as a flame retardant, i.e., when the complex did not contain aluminum phosphite and crystal water, and applied in flame retardation of PA6 and PA66, some mold fouling was generated during the injection molding process. It can be seen from Comparative example 7 that, when the complex obtained in Comparative example 3 was combined with aluminum diethylphosphinate to serve as a flame retardant, i.e., when the complex did not contain aluminum hydrogen alkylphosphonate and aluminum phosphite, and applied in flame retardation of PA6 and PA66, some mold fouling was generated during the injection molding process. Such results indicated that the complex was required to contain aluminum alkylphosphonate, aluminum hydrogen alkylphosphonate, aluminum phosphite and crystal water simultaneously and then combined with aluminum diethylphosphinate to serve as a flame retardant, thereby having a better effect.

**Table 7 Testing results in Comparative examples 8-11 and Examples 13-19**

| Performance index | Comparative Example 8 | Comparative Example 9 | Comparative Example 10 | Comparative Example 11 | Example 13 | Example 14 | Example 15 | Example 16 | Example 17 | Example 18 | Example 19 |
|---|---|---|---|---|---|---|---|---|---|---|---|
| Tensile strength, MPa | 110 | 119 | 120 | 120 | 117 | 119 | 123 | 126 | 121 | 123 | 120 |
| Vertical burning test, 0.8mm | V-1 | V-0 | V-0 | V-0 | V-0 | V-0 | V-0 | V-0 | V-0 | V-0 | V-0 |
| Mold fouling in injection molding process | Much mold fouling | Much mold fouling | Slight mold fouling | Much mold fouling | No mold fouling | No mold fouling | No mold fouling | No mold fouling | No mold fouling | No mold fouling | No mold fouling |
| Foaming phenomenon | Obvious foaming | Slight foaming | No foaming | Slight foaming | No foaming | No foaming | No foaming | No foaming | No foaming | No foaming | No foaming |

It can be seen from Table 7 that, when the complexes of the present disclosure were combined with aluminum diethylphosphinate to serve as a flame retardant and applied in flame retardation of high-temperature nylon, no mold fouling was generated during the injection molding process, no foaming occurred during the preparation process, and the obtained material had good mechanical property and good flame-retardant property. It can be seen from Comparative Example 8 that, when aluminum phosphite was combined with aluminum diethylphosphinate to serve as a flame retardant and applied in flame retardation of high-temperature nylon, obvious foaming occurred during the preparation process, some mold fouling was generated during the injection molding process, and the flame-retardant property of the obtained material could only reach V-1 level. It can be seen from Comparative Example 9 that, when the complex obtained in Comparative Example 1 was combined with aluminum diethylphosphinate to serve as a flame retardant, i.e., the complex only contained aluminum alkylphosphonate, and applied in flame retardation of high-temperature nylon, foaming occurred during the preparation process, and some mold fouling was generated during the injection molding process. It can be seen from Comparative Example 10 that, when the complex obtained in Comparative Example 2 was combined with aluminum diethylphosphinate to serve as a flame retardant, i.e., when the complex did not contain aluminum phosphite and crystal water, and applied in flame retardation of high-temperature nylon, mold fouling was generated during the injection molding process. It can be seen from Comparative Example 11 that, when the complex in Comparative Example 3 was combined with aluminum diethylphosphinate to serve as a flame retardant, i.e., when the complex did not contain aluminum hydrogen alkylphosphonate and aluminum phosphite, and applied in flame retardation of high-temperature nylon, foaming occurred during the preparation process and mold fouling was generated during the injection molding process. Such results indicated that the complex was required to contain aluminum alkylphosphonate, aluminum hydrogen alkylphosphonate, aluminum phosphite and crystal water simultaneously, then combined with aluminum diethylphosphinate to serve as a flame retardant. When the flame retardant was applied in the flame retardation of high-temperature nylon, no foaming occurred during the preparation process and no mold fouling was generated during the injection molding process, and the mechanical properties and flame retardant properties of the obtained materials were good.

Obviously, the above examples of the present disclosure are only examples for clearly illustrating the present disclosure, rather than limitations on embodiments of the present disclosure. For those skilled in the art, other changes or modifications in different forms can be made based on the above description. It is not necessary and impossible to list all the embodiments here. Any modifications, equivalent substitutions and improvements made within the spirit and principles of the present disclosure shall fall within the protection scope of the claims of the present disclosure.

## Claims

1. An alkylphosphonate complex, having a structural formula shown in formula (I): 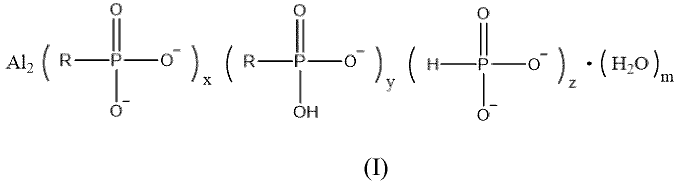 wherein in the formula (I), *R* is ethyl; *x* represents 2.6-2.98; y represents 0.01-0.39, z represents 0.01-0.10; and *m* represents 1.0-2.0.

2. The complex according to claim 1, wherein a median particle diameter, D₅₀, of the alkylphosphonate complex is in a range of from 1 µm to 100 µm.

3. The complex according to claim 1, wherein a content of sodium sulfate in the alkylphosphonate complex is in a range of from 100 ppm to 5,000 ppm.

4. A preparation method of the alkylphosphonate complex according to claim 1, comprising following steps:
mixing an alkylphosphonate and a phosphite to obtain a mixture, subjecting the mixture to a metathesis reaction with an aqueous aluminum salt solution, and then subjecting a resulting mixture to precipitation, filtration, washing, and drying at a temperature of 105-120 °C successively to obtain the alkylphosphonate complex; the metathesis reaction is conducted at a temperature of 60-130 °C.

5. The preparation method of the alkylphosphonate complex according to claim 4, wherein the aqueous aluminum salt solution is an aqueous aluminum sulfate solution or an aqueous aluminum chloride solution.

6. The preparation method of the alkylphosphonate complex according to claim 4, wherein the alkylphosphonate is prepared by one of the following methods:
Method 1:
hydrolyzing a diester of an alkylphosphonic acid under an alkaline condition to obtain the alkylphosphonate;
or, Method 2:
S1. in the presence of an initiator, allowing a phosphorous acid in an aqueous solution to react with gas-phase ethylene so as to obtain an alkylphosphonic acid;
S2. allowing the alkylphosphonic acid to react with an alkaline solution in an equimolar ratio to obtain the alkylphosphonate.

7. The preparation method of the alkylphosphonate complex according to claim 6, wherein in step S2, the alkaline solution is an aqueous sodium hydroxide solution or an aqueous potassium hydroxide solution.

8. A use of the alkylphosphonate complex according to any one of claims 1-3, serving as a flame retardant synergist of aluminum diethylphosphinate.

9. A composition, comprising following components by weight: 1 to 7 parts of the alkylphosphonate complex according to any one of claims 1-3; and 12 to 19 parts of aluminum diethylphosphinate.

10. A use of the composition according to claim 9, serving as a flame retardant in flame retardation of PA66, PA6, or high-temperature nylon.
